# EUROPÄISCHE PATENTANMELDUNG

(11) **EP 3 241 677 A1**
(43) Veröffentlichungstag der Anmeldung: **08.11.2017**
(21) Anmeldenummer: 17168962.3
(22) Anmeldetag: 02.05.2017
(51) Int. Cl.: B32B 27/08, B32B 27/30, B32B 27/32, B32B 27/34, B32B 27/36, C08J 7/04, B65D 65/40, C09D 189/00

(54) **THERMOFORMBARER MEHRSCHICHTVERBUND MIT SAUERSTOFFBARRIERE SOWIE PROTEIN ENTHALTENDE FORMULIERUNG ZUR HERSTELLUNG DES MEHRSCHICHTVERBUNDES**

(30) Priorität: 03.05.2016 DE 102016108214; 09.06.2016 DE 102016110673
(71) Anmelder: Fraunhofer-Gesellschaft zur Förderung der angewandten Forschung e.V., 80686 München (DE)
(72) Erfinder: Stäbler, Andreas, 85551 Kirchheim (DE); Schmid, Markus, 85406 Zolling (DE)
(74) Vertreter: Gagel, Roland

(57) **Zusammenfassung**

Die vorliegende Erfindung betrifft einen thermoformbaren Mehrschichtverbund, der wenigstens eine thermoplastische Polymerschicht aufweist, auf der eine geschlossene Schicht aus einer proteinhaltigen Formulierung abgeschieden ist. Die Schicht aus der proteinhaltigen Formulierung enthält Proteine, die wenigstens teilweise denaturiert sind, wenigstens ein denaturierend wirkendes Reagenz und einen oder mehrere Weichmacher. Der Mehrschichtverbund ist dauerhaft thermoformbar und weist eine hohe Sauerstoffbarriere auf, so dass er sich vorteilhaft für Verpackungsanwendungen in der Lebensmitteltechnologie einsetzen lässt.

## Beschreibung

### Technisches Anwendungsgebiet

Die vorliegende Erfindung betrifft einen thermoformbaren Mehrschichtverbund, der wenigstens eine thermoplastische Polymerschicht aufweist, auf der eine geschlossene Schicht aus einer proteinhaltigen Formulierung abgeschieden ist, sowie eine Protein enthaltende Formulierung zur Herstellung des Mehrschichtverbundes.

Thermoformbare Mehrschichtverbunde lassen sich beispielsweise für Verpackungsanwendungen in der Lebenstechnologie einsetzen. Diese Anwendungen erfordern häufig eine geringe Sauerstoffdurchlässigkeit sowie eine Thermoformbarkeit der eingesetzten Verpackungsmaterialien.

### Stand der Technik

In der Fachliteratur ist die gute Sauerstoffbarriere von proteinbasierten Filmen umfangreich beschrieben. So beschreibt beispielsweise Gontard et al., 1994, den Einsatz von Weizengluten als Edible Coating von Lebensmitteln, während Weller et al., 1998, hierfür Zein einsetzt. Bei Edible Coatings wird das Lebensmittel direkt mit einer proteinbasierten Formulierung beschichtet, um es vor äußeren Einflüssen, insbesondere vor Sauerstoff zu schützen. Weitere Autoren beschreiben hierfür den Einsatz von Soja-(Brandenburg et al., 1993) oder Molkenprotein (Mate und Krochta, 1996).

Aufgrund ihrer hohen Sauerstoffbarriere und guten mechanischen Stabilität werden Proteine nicht nur als Edible Coatings eingesetzt. Eine Reihe von Autoren hat auch deren Nutzung als Barriereschicht in Mehrschichtverbunden für Lebensmittelverpackungen bewertet (Coltelli et al., 2016). So konnten unter anderem Hong und Krochta (2004), Schmid et al. (2012) und Bugnicourt et al. (2013) nachweisen, dass Beschichtungen auf Basis von Molkenprotein prinzipiell in der Lage sind, das synthetische Barrierematerial Ethylen-Vinylalkohol-Copolymer (EVOH) in Mehrschichtverbunden zu substituieren. Ähnliche Barrierewerte wurden von Gofferje et al., 2015, für Beschichtungen auf Basis von Jatrophaprotein berichtet.

Allerdings ist laut Bugnicourt et al., 2013, für das Erreichen der guten Barriere ein Quervernetzen der Proteine erforderlich. Dies hat zur Folge, dass die Beschichtung kein dauerhaft thermoplastisches Verhalten mehr aufweist (Areas, 1992, Hernandez-Izquierdo und Krochta , 2008) . Formulierungen auf Basis von nativen Proteinen können nur extrudiert, thermogeformt oder mittels Spritzguss verarbeitet werden, wenn geeignete Additive hinzugefügt werden. Solche Additive sind z.B. Weichmacher (Verbeek und van den Berg , 2010).

Es gibt sowohl in der Fach- als auch in der Patentliteratur eine Reihe von Schriften, die sich mit der Thermoplastifizierung von proteinbasierten Formulierungen beschäftigen.

So beschreiben Hernandez-Izquierdo und Krochta, 2009, die Extrusion von Folien auf Basis von Molkeprotein. Allerdings waren hierfür Weichmacheranteile von fast 50% (m/m TS) erforderlich. Laut Hernandez-Izquierdo und Krochta , 2008 , Gontard et al., 1993, und McHugh und Krochta, 1994, führen derartig hohe Weichmacheranteile jedoch zu einer deutlichen Verschlechterung der mechanischen Stabilität sowie der Barriereeigenschaften.

Bräuer et al. (2007) beschreiben die Extrusion von verschiedenen Pflanzenproteinen nach chemischer Alkylierung mit Palmsäurechlorid. Für die Veröffentlichung wurden keine Folien hergestellt und über die Barriereeigenschaften dieser Materialien ist nichts bekannt. Die Alkylierung mit Fettsäurechloriden wurde auch von Winkler et al. (2015) erfolgreich zur Thermoplastifizierung von Molkenprotein eingesetzt. Auch hier sind keine Werte zur Sauerstoffpermeabilität bekannt.

Eine ganze Reihe von Autoren beschäftigen sich mit der Extrusion und dem Spritzgießen von proteinbasierten Formulierungen, die zusätzlich noch reaktive Additive enthalten. Dies sind in erster Line Substanzen wie Natriumdodecylsulfat (SDS), Urea und Natriumsulfit und somit Verbindungen, die Wechselwirkungen zwischen Proteinen beeinflussen. So beschreiben beispielsweise Barone et al., 2006, die Extrusion von Federkeratin durch den Einsatz von Natriumsulfit. Der Einsatz von Natriumsulfit führte laut Orliac et al., 2003, und Ralston und Osswald, 2008, auch zur thermoplastischen Verarbeitbarkeit von Sonnenblumenprotein. Bei Mais- und Sojaprotein hingegen führte der Zusatz von SDS zu den gewünschten thermoplastischen Eigenschaften (Mo und Sun, 2001 , Zhong und Sun, 2001 und Sessa et al., 2006). Bei Weizengluten wurden die erforderlichen Eigenschaften durch Urea erzielt (Pommet et al., 2005) und im Fall von Blutmehl war laut Verbeek und van den Berg , 2011, der Einsatz der drei Additiven erforderlich. Allerdings liegt bei allen Veröffentlichungen der Schwerpunkt auf der thermoplastischen Verarbeitbarkeit und den mechanischen Eigenschaften der Werkstücke . Zu deren Barriereeigenschaften ist nichts bekannt.

Auch in der Patentliteratur sind eine Vielzahl von proteinbasierten Beschichtungen sowie thermoplastischen Proteinformulierungen beschrieben. EP2734575A1 beschreibt eine Formulierung auf Basis von nativem Molkeprotein und einen Prozess zur Beschichtung eines Substratfilms, wobei das Protein zumindest teilweise denaturiert und somit quervernetzt. Eine Thermoformbarkeit der Beschichtung wird nicht beschrieben und ist aufgrund der Denaturierung eines nativen Proteins auch nicht zu erwarten.

In DE3937168 A1 wird eine bioabbaubare Verpackung beschrieben. Für deren Herstellung werden pflanzliche Cellulose und Stärke mit tierischem Protein und Wasser vermischt und anschließend in eine gewünschte Form gegossen und getrocknet. Thermoplastische oder Barriereeigenschaften werden nicht erwähnt.

In WO9831731 A1 wird die Nutzung einer Beschichtung auf Basis von Polysacchariden und/oder Proteinen als Transferfilm für Additive beschrieben. Der Film wird dabei mit funktionellen Verbindungen wie Aromen, antimikrobiellen Substanzen u.ä. versehen und als Beschichtung auf einen polymeren Träger aufgebracht. Der Verbund wird anschließend als Lebensmittelverpackung genutzt, wobei die Additive von der Beschichtung auf das Lebensmittel übergehen sollen. Barriereeigenschaften der Beschichtung sind nicht beschrieben.

In EP2263872 A1 wird ein bioabbaubares Verpackungsmaterial mit einer verbesserten Sauerstoffbarriere offengelegt. Das Verpackungsmaterial besteht aus Polymilchsäure, Stärke oder einem Protein. Für die Verbesserung der Sauerstoffbarriere ist in das Biopolymer nanoskalige Tonerde eingearbeitet.

US6034198 A beschreibt ein thermoplastisches Material auf Basis von Sojaprotein. Das Protein wird mit Anhydriden alkyliert um die gewünschten thermoplastischen Eigenschaften zu erreichen . Für das Material wird ein Einsatz als Film mit geringer Wasserdampfpermeabilität genannt.

EP1888332A2 beschreibt ein Material auf Basis eines gehärteten Sojaproteins. Diesem wird ein Verstärkungsmaterial beispielsweise nanoskalige Tonerden , Cellulose etc. zugesetzt. Ein Einsatz des Composites im Verpackungsbereich wird nicht erwähnt. Auch findet sich keine Nutzung als Barriereschicht.

AU199456739A beschreibt ein Material mit thermoplastischen Eigenschaften. Dieses Material besteht aus einer Stärke- sowie einer Proteinkomponente, wobei der Anteil der Stärkekomponente höher sein muss als der der Proteinkomponente.

In US2010234515 AA wird ein proteinbasierter, thermoplastischer Kunststoff offengelegt. Die gewünschten Eigenschaften werden dabei durch Nutzung von SDS als Denaturierungsreagenz sowie durch Druck und Temperatur erreicht. Eine Nutzung des Materials als Beschichtung mit Sauerstoffbarriere wird nicht erwähnt.

US2010159203 AA beschreibt einen bioabbaubaren Film auf Basis nachwachsender Rohstoffe. Dieser weist thermoplastische Eigenschaften auf und besteht aus Stärke und Protein, wobei der Proteinanteil maximal 50% betragen darf. Die gewünschte Eigenschaft der Thermoplastizität durch Additive erreicht wird, die das Quervernetzen der Formulierungsbestandteile verhindern. Im vorliegenden Fall sind das Weichmacher auf Basis von Carboxylsäuren.

In US2010233396A werden die Zusammensetzung und das Herstellungsmethode eines bioabbaubaren Films beschrieben. Der Film besteht aus 20% bis 70% Protein, 10% bis 60% Cellulose und zwischen 1% und 15% Urea. Diese Mischung wird mit Wasser versetzt, durchmischt, anschließend ausgerollt und getrocknet. Es werden weder thermoplastische Eigenschaften noch ein Einsatz als Sauerstoffbarriere bzw. eine Anwendung im Verpackungsbereich im Schutzrecht erwähnt.

Keine der bisher bekannten Lösungen zeigt jedoch ausreichend thermoformbare Mehrschichtverbunde, die eine proteinbasierte Beschichtung mit guter Sauerstoffbarriere aufweisen.

Die Aufgabe der vorliegenden Erfindung besteht darin, einen als Verpackungsmaterial für Lebensmittel geeigneten Mehrschichtverbund anzugeben, der eine proteinbasierte Schicht mit geringer Sauerstoffdurchlässigkeit enthält und gleichzeitig auch dauerhaft thermoumformbar ist, um ein Tiefziehen des Mehrschichtverbundes beispielsweise zu Schalen zu ermöglichen. Weiterhin soll eine proteinhaltige Formulierung zur Herstellung der proteinbasierten Schicht des Mehrschichtverbundes bereitgestellt werden.

### Darstellung der Erfindung

Die Aufgabe wird mit dem thermoformbaren Mehrschichtverbund und der Protein enthaltenden Formulierung gemäß den Patentansprüchen 1 und 13 gelöst. Vorteilhafte Ausgestaltungen des Mehrschichtverbundes bzw. der Protein enthaltenden Formulierung sind Gegenstand der abhängigen Patentansprüche oder lassen sich der nachfolgenden Beschreibung sowie den Ausführungsbeispielen entnehmen.

Der vorgeschlagene thermoformbare Mehrschichtverbund weist wenigstens eine thermoplastische Polymerschicht auf, auf der eine geschlossene Schicht aus einer proteinhaltigen Formulierung abgeschieden ist. Die Schicht aus der proteinhaltigen Formulierung enthält Proteine, die wenigstens teilweise denaturiert sind, wenigstens ein denaturierend wirkendes Reagenz und einen oder mehrere Weichmacher. Die Proteine bilden dabei den Hauptbestandteil der Schicht, weisen also den größten Massenanteil an der Schicht auf. Unter Denaturierung wird in diesem Zusammenhang eine im Vergleich zum nativen Protein veränderte Sekundär- und/oder Tertiär- und/oder Quartärstruktur des Proteins verstanden.

Unter dem denaturierend wirkenden Reagenz wird eine organische oder anorganische Verbindung verstanden, welche in der Lage ist, kovalente und/oder nicht-kovalente intermolekulare Wechselwirkungen im Protein zu beeinflussen und somit Änderungen in der Sekundär-, Tertiär- und/oder Quartärstruktur des Proteins herbeizuführen.

Durch die Kombination der genannten Bestandteile der Schicht aus der proteinhaltigen Formulierung wird ein Mehrschichtverbund erhalten, der sowohl über eine gute Sauerstoffbarriere verfügt als auch dauerhaft, d.h. auch nach längerer Lagerung, thermoformbar ist. Hierbei wird einerseits durch die Proteine die gute Sauerstoffbarriere erreicht und andererseits durch das wenigstens eine denaturierend wirkende Reagenz die Vernetzung der wenigstens teilweise denaturierten Proteine verhindert oder zumindest reduziert und dadurch in Verbindung mit den Weichmachern die Thermoformbarkeit der Schicht bzw. des Mehrschichtverbundes erhalten.

Der Mehrschichtverbund besteht dabei wenigstens aus einer thermoformbaren Polymerschicht bzw. Polymerfolie, die mit der Schicht aus der proteinhaltigen Formulierung beschichtet wird. Es besteht auch die Möglichkeit diesen Schichtverbund mit weiteren Schichten zu erweitern, bspw. mit einer oder mehreren weiteren Polymerschichten bzw. Polymerfilmen zu kaschieren.

Bei dem einen oder den mehreren denaturierenden Reagenzien handelt es sich vorzugsweise um Verbindungen, die nicht-kovalente Wechselwirkungen im Protein beeinflussen bzw. entsprechende Bindungen aufbrechen. Bei diesen Wechselwirkungen oder Bindungen handelt es sich in erster Linie aber nicht ausschließlich um Wasserstoffbrückenbindungen und hydrophobe Wechselwirkungen. Beispiele für derartige Substanzen sind Urea, Thiourea, Alkylphenylpolyethylenglykol (Triton), Formamide, Natriumdodecylsulfat (SDS) und Natriumsalze von langkettigen Fettsäuren (CHAPS). Der Anteil der denaturierenden Reagenzien in der proteinhaltigen Schicht bzw. Formulierung beträgt bei Einsatz eines denaturierend wirkenden Reagenz vorzugsweise zwischen 1% und 40%, idealerweise zwischen 1% und 25%. Die Prozentangaben beziehen sich auf die Masse an Protein in der Schicht bzw. Formulierung.

Besonders gute Eigenschaften hinsichtlich der Sauerstoffbarriere und Thermoformbarkeit werden erreicht, wenn die Schicht aus der proteinhaltigen Formulierung zwei unterschiedliche denaturierend wirkende Reagenzien, vorzugsweise zur Beeinflussung nicht-kovalenter Wechselwirkungen in und/oder zwischen den Proteinen aufweist. Der Gesamtanteil der denaturierenden Reagenzien in der proteinhaltigen Schicht bzw. Formulierung beträgt dann in diesem Fall vorzugsweise zwischen 2% und 45%, idealerweise zwischen 3% und 30%, der Masse an Protein in der Schicht bzw. Formulierung.

In einer weiteren Ausgestaltung kann es vorteilhaft sein, auch reaktive Additive als denaturierend wirkende Reagenzien einzusetzen, die kovalente Bindungen im Protein beeinflussen. Dies sind in erster Linie Disulphidbrücken. Beispiele für derartige Substanzen sind Natriumsulfit, Cystein, Cystin und Dithiothreitol. Diese Substanzen können sowohl in Kombination mit den oben genannten Verbindungen als auch alleine eingesetzt werden. Besonders vorteilhaft ist es, wenn der Anteil dieser Substanzen in der proteinhaltigen Schicht bzw. Formulierung zwischen 1% und 15%, idealerweise zwischen 1% und 7% beträgt. Die Prozentangaben beziehen sich wiederum auf die Masse an Protein in der Schicht bzw. Formulierung.

Bei den in der Schicht bzw. der Formulierung eingesetzten Weichmachern handelt es sich vorzugsweise um biobasierte Weichmacher. Beispiele sind Glycerin, Sorbitol, Mono-, Di- und Triglyceride, Fettsäuren, epoxidierte Fette und Fettsäuren, Fettsäuresalze, Citrate, Polyethylenglykol, Propylenglycol, Diethylenglycol, Triethylenglycol, Wasser, Milchsäure, Tartate, Phthalate, Butandiole und andere Stoffe mit ähnlichen Eigenschaften.

Der Anteil des einen oder der mehreren Weichmacher in der proteinhaltigen Schicht bzw. Formulierung beträgt vorzugsweise zwischen 1% und 70%, idealerweise zwischen 20% und 70%, bezogen auf die Masse an Protein in der Schicht bzw. in der Formulierung.

Der Proteinanteil in der Schicht aus der proteinhaltigen Formulierung beträgt vorzugsweise zwischen 40% und 90% der Gesamtmasse der Schicht. Dies gilt auch für die getrocknete Formulierung (bezogen auf die Gesamtmasse der getrockneten Formulierung). Besonders gute Schichteigenschaften ergeben sich, wenn die Proteine in Form eines Proteinkonzentrats oder - isolats mit einem Proteingehalt > 50%, vorzugsweise > 80%, idealerweise in Form eines Proteinisolats mit einem Proteingehalt > 90% der Formulierung zugegeben werden. Die Formulierung selbst kann dabei sowohl in flüssiger Form als auch in getrockneter Form vorliegen, beispielsweise als Pulver. In flüssiger Form sind die Bestandteile dann in einem geeigneten Löse- oder Dispersionsmittel gelöst bzw. dispergiert und können in dieser Form zur Beschichtung auf die thermoplastische Polymerschicht aufgetragen werden. Liegt die Formulierung in getrockneter Form vor, so wird diese vor dem Auftragen entsprechend in einem geeigneten Löse- oder Dispersionsmittel gelöst bzw. dispergiert. Der Proteinanteil in der flüssigen Formulierung, die entsprechend die Weichmacher, die denaturierend wirkenden Additive und das Löse- bzw. Dispersionsmittel enthält, liegt dabei vorzugsweise zwischen 5% und 70%, idealerweise zwischen 10% und 60%. In der Formulierung können die Proteine auch nicht denaturiert vorliegen. Die zumindest teilweise Denaturierung erfolgt dann erst bei einem Einsatz der Formulierung, bspw. unmittelbar vor, während oder nach dem Aufbringen auf die thermoplastische Polymerschicht. Bei den Proteinen kann es sich um tierische, pflanzliche und auch um mikrobielle Proteine handeln. Beispiele sind unter anderem Raps-, Soja-, Jatropha-, Kartoffel-, Lupinen- und Molkenprotein.

Durch das Löse- oder Dispersionsmittel ergeben sich besonders gute Verarbeitungseigenschaften für die Formulierung, insbesondere wenn der Anteil des Löse- bzw. Dispersionsmittels zwischen 20% und 95%, idealerweise zwischen 35% und 90% an der Gesamtmasse der Formulierung beträgt. Bei dem Löse- bzw. Dispersionsmittel handelt es sich vorzugsweise um Wasser, Ethanol, Ethylacetat oder auch um Mischungen aus diesen Stoffen.

Die in flüssiger Form auf die thermoplastische Polymerschicht aufgebrachte Formulierung wird anschließend getrocknet, um die proteinhaltige Schicht zu erhalten. Besonders vorteilhafte Eigenschaften des Mehrschichtverbundes werden erhalten, wenn die proteinbasierte Schicht im Mehrschichtverbund noch einen Restgehalt an Löse- bzw. Dispersionsmittel aufweist. Dieser Restgehalt beträgt vorzugsweise zwischen 2% und 35%, idealerweise zwischen 5% und 18% bezogen auf die Masse der Schicht.

Die wenigstens teilweise denaturierten Proteine der Schicht aus der proteinhaltigen Formulierung bzw. der Formulierung selbst werden vorzugsweise durch thermische Denaturierung erhalten. Unter thermischer Denaturierung wird in diesem Zusammenhang eine irreversible Änderung der Tertiärstruktur des Proteins durch Hitzeeinwirkung verstanden. Bei dem vorgeschlagenen Mehrschichtverbund bzw. der zu dessen Herstellung eingesetzten Formulierung beträgt der Denaturierungsgrad der Proteine zwischen 5% und 100%, idealerweise zwischen 10% und 100%.

Es zeigt sich, dass sich die mechanischen Eigenschaften der proteinhaltigen Schicht verbessern, wenn die Schicht Proteinhydrolysat enthält. Vorteilhaft ist ein Hydrolysatanteil bezogen auf den Gesamtproteinanteil zwischen 10% und 55%, idealerweise zwischen 30% und 45% beträgt. Das Proteinhydrolysat kann den gleichen pflanzlichen, tierischen oder mikrobiellen Ursprung haben, wie die Hauptproteinfraktion, kann jedoch auch aus einer oder mehrere anderen Proteinquellen stammen.

Die proteinhaltige Schicht bzw. Formulierung kann auch noch weitere Additive enthalten wie beispielsweise antimikrobielle Substanzen.

Neben der proteinhaltigen Schicht enthält der Mehrschichtverbund mindestens eine thermoplastische Polymerfolie. Mögliche Polymere hierfür sind Polyethylen, Polypropylen, Polyethylenterephthalat, Polybuthylen, Acrylnitril-Butadien-Styrol, Polyamide, Polymethylmethaacrylat, Polycarbonat, Polystyrol, Polyetheretherketon, Polyvinylchlorid, Zelluloid, Polymilchsäure, Polyhydroxyalkanoate, Polylethylenfuranoat und andere Kunststoffe die thermoplastisch verarbeitbar sind.

### Wege zur Ausführung der Erfindung

Nachfolgend werden die Formulierung und ihre Anwendung als Film bzw. als proteinhaltige Schicht im Mehrschichtverbund anhand von Beispielen nochmals dargestellt.

### Beispiel 1:

79g Molkeproteinisolat werden in 614g Wasser unter Rühren gelöst. Anschließend wird die Lösung auf 90°C erhitzt. Nach 30 Minuten wird die Lösung auf 50°C abgekühlt und unter Rühren werden 50g Glycerin und 15,8g SDS zugegeben und gelöst.

20g der Lösung werden in eine Petrischale gegossen. Diese wird bei 23°C und 50% relativer Feuchte zum Trocknen eingelagert.

Eine mechanische Prüfung in der Zugprüfmaschine zeigt, dass die Zugdehnung des dadurch erhaltenen proteinhaltigen Films bei 23°C im Vergleich zur Referenz ohne SDS um 33% erhöht ist. Bei 100°C ergibt sich eine Verdoppelung der Zugdehnung.

Die Messung der Sauerstoffbarriere ergibt eine Durchlässigkeit (gemessen bei 23°C und 50% relativer Feuchte) von 105 cm³/(m²*d*bar) bei einer auf 100µm normierten Schichtdicke und ist somit geringfügig höher als die Sauerstoffpermeabilität der Referenz (68±7 cm³/(m²*d*bar)), welche kein denaturierend wirkendes Reagenz enthält.

### Beispiel 2:

79g Molkeproteinisolat werden in 610g Wasser unter Rühren gelöst. Anschließend wird die Lösung auf 90°C erhitzt. Nach 30 Minuten wird die Lösung auf 50°C abgekühlt und unter Rühren werden 50g Glycerin und 15,8g SDS und 4g Urea zugegeben und gelöst.

20g der Lösung werden in eine Petrischale gegossen. Diese wird bei 23°C und 50% relativer Feuchte zum Trocknen eingelagert.

Eine mechanische Prüfung in der Zugprüfmaschine zeigt, dass die Zugdehnung des Films bei 23°C im Vergleich zur Referenz ohne SDS ebenfalls 33% erhöht ist. Bei einer Prüfung bei 100°C verbessert sich die Zugdehnung des Films im Vergleich zur Referenz um 133%.

Die Messung der Sauerstoffbarriere ergibt eine Durchlässigkeit (gemessen bei 23°C und 50% relativer Feuchte) von 109 cm³/ (m²*d*bar) bei einer auf 100µm normierten Schichtdicke. Im Vergleich zu Bespiel 1 weist der Gießfilm mit zwei denaturierend wirkenden Additiven somit, bei vergleichbarer Barriere, im für das Thermoformen relevanten Temperaturbereich (≥100°C) eine deutlich verbesserte Zugdehnung auf.

### Beispiel 3

79g Molkeproteinisolat werden in 6165g Wasser unter Rühren gelöst. Anschließend wird die Lösung auf 90°C erhitzt. Nach 30 Minuten wird die Lösung auf 50°C abgekühlt und unter Rühren werden 500g Glycerin und 8g SDS und 38g Urea zugegeben und gelöst.

Die Lösung wird mit Hilfe einer kontinuierlich arbeitenden Lackier- und Kaschieranlage im Rolle zu Rolle-Verfahren auf amorphes Polyethylenterephthalat aufgebracht und bei 65°C kontinuierlich getrocknet. Es ergeben sich Schichtdicken von 7-15 µm. Die beschichtete Folienrolle wird anschließend bei 23°C und 50% relativer Feuchte für mehrere Wochen gelagert.

Mittels einer Thermoformanlage konnten die Folien zu Schalen mit einer Tiefe von 5cm warmgeformt werden. Die Beschichtung bleibt dabei intakt, zeigt also kein Ablösen oder Risse auf. Die Messung der Sauerstoffbarriere der so hergestellten Schalen ergibt eine Durchlässigkeit von 13 cm³/ (m²*d*bar). Dies stellt mehr als eine Verdopplung der Barriere im Vergleich zu unbeschichteten Schalen aus amorphem Polyethylenterephthalat dar, welche eine Durchlässigkeit (gemessen bei 23°C und 50% relativer Feuchte) von >30 cm³ / (m²*d*bar) aufzeigen.

Ergänzend konnte die o.g. beschichtete Substratfolie mit Hilfe eines Kaschierklebers mit einer Polyethylenfolie und gegen sich selbst kaschiert werden. Im letzteren Fall wurden die Molkenproteinschichten miteinander verklebt. Diese so entstandenen Folienverbunde lassen sich ebenfalls warmformen. Schalen aus diesen Verbunden weisen eine Sauerstoffdurchlässigkeit zwischen 0,36 und 1,57 [cm³ /(Schale d bar)] auf.

### Literaturverzeichnis

AREAS, J. A. G. 1992. Extrusion of food proteins. Critical Reviews in Food Science and Nutrition, 32, 365-392.
BARONE, J. R., SCHMIDT, W. F. & GREGOIRE, N. T. 2006. Extrusion offeather keratin. J. Appl. Polym. Sci., 100, 1432-1442.
BRANDENBURG, A. H., WELLER, C. L. & TESTIN, R. F. 1993. Edible Films and Coatings from Soy Protein. Journal of Food Science, 58, 1086-1089.
BRÄUER, S., MEISTER, F., GOTILÖBER, R.-P. & NECHWATAL, A. 2007. Preparation and Thermoplastic Processing of Modified Plant Proteins. Macromolecular Materials and Engineering, 292, 176-183.
BUGNICOURT, E., SCHMID, M., NERNEY, 0. M., WILDNER, J., SMYKALA, L., LAZZERI, A. & CINELLI, P. 2013. Processing and Validation of Whey-Protein-Coated Films and Laminates at Semi Industrial Scale as Novel Recyclable Food Packaging Materials with Excellent Barrier Properties. Advances in Materials Science and Engineering, 2013.
COLTELLI, M.-B., WILD, F., BUGNICOURT, E., CINELLI, P., LINDNER, M., SCHMID, M., WECKEL, V., MÜLLER, K., RODRIGUEZ, P., STAEBLER, A., RODRIGUEZ-TURIENZO, L. & LAZZERI, A. 2016. State of the Art in the Development and Properties of Protein-Based Films and Coatings and Their Applicability to Cellulose Based Products: An Extensive Review. Coatings, 6, 1-59.
GOFFERJE, G., SCHMID, M. & STÄBLER, A. 2015. Characterization of Jatropha curcas L. Protein Cast Films with respect to Packaging Relevant Properties. International Journal of Polymer Science.
GONTARD, N., DUCHEZ, C., CUQ, J.-L. & GUILBERT, S. 1994. Edible composite films of wheat gluten and lipids: water vapour permeability and other physical properties. International Journal of Food Science & Technology, 29, 39-50.
GONTARD, N., GUILBERT, S. & CUQ, J.-L. 1993. Water and Glycerol as Plasticizers Affect Mechanical and Water Vapor Barrier Properties of an Edible Wheat Gluten Film. Journal of Food Science, 58, 206-211.
HERNANDEZ-IZQUIERDO, V. M. & KROCHTA, J. M. 2008. Thermoplastic Processing of Proteins for Film Formation-A Review. Journal of Food Science, 73, R30-R39.
HERNANDEZ-IZQUIERDO, V. M. & KROCHTA, J. M. 2009. Thermal transitions and heat-sealing of glycerol-plasticized whey protein films. Packaging Technology and Science, 22, 255-260.
HONG, S.-1. & KROCHTA, J. M. 2004. Whey protein isolate coating on LDPE film as a novel oxygen barrier in the composite structure. Packaging Technology and Science, 17, 13-21.
MATE, J. 1. & KROCHTA, J. M. 1996. Comparison of oxygen and water vapor permeabilities of whey protein isolate and ß-lactoglobulin edible films. Journal of agricultural and food chemistry, 44, 3001-3004.
MCHUGH, T. H. & KROCHTA, J. M. 1994. Sorbitol-vs glycerol-plasticized whey protein edible films: integrated oxygen permeability and tensile property evaluation. Journal of Agricultural and Food Chemistry, 42, 841-845.
MO, X. & SUN, X. 2001. Thermal and mechanical properties of plastics molded from urea-modified soy protein isolates. Journal of the American Oil Chemists' Society, 78, 867-872.
ORLIAC, 0., SILVESTRE, F., ROUILLY, A. & RIGAL, L. 2003. Rheological Studies, Production, and Characterization of Injection-Molded Plastics from Sunflower Protein Isolate. Industrial & Engineering Chemistry Research, 42, 1674-1680.
POMMET, M., REDL, A., GUILBERT, S. & MOREL, M.-H. 2005. Intrinsic influence of various plasticizers on functional properties and reactivity of wheat gluten thermoplastic materials. Journal of Cereal Science, 42, 81-91.
RALSTON, B. E. & OSSWALD, T. A. 2008. Viscosity of Soy Protein Plastics Determined by Screw-Driven Capillary Rheometry. Journal of Polymers and the Environment, 16, 169-176.
SCHMID, M., DALLMANN, K., BUGNICOURT, E., CORDONI, D., WILD, F., LAZZERI, A. & NOLLER, K. 2012. Properties of whey protein coated films and laminates as novel recyclable food packaging materials with excellent barrier properties. International Journal of Polymer Science, 2012, 7.
SESSA, D. J., SELLING, G. W., WILLETI, J. L. & PALMQUIST, D. E. 2006. Viscosity control of zeinprocessing with sodium dodecyl sulfate. Industrial Crops and Products, 23, 15-22.
VERBEEK, C. J. & VAN DEN BERG, L. E. 2011. Development of proteinous bioplastics using bloodmeal. Journal of Polymers and the Environment, 19, 1-10.
VERBEEK, C. J. R. & VAN DEN BERG, L. E. 2010. Extrusion Processing and Properties of Protein-Based Thermoplastics. Macromolecular Materials and Engineering, 295, 10-21.
WELLER, C. L., GENNADIOS, A. & SARAIVA, R. A. 1998. Edible Bilayer Films from Zein and Grain Sorghum Wax or Carnauba Wax. L WT - Food Science and Technology, 31, 279-285.
WINKLER, H., VORWERG, W. & SCHMID, M. 2015. Synthesis of hydrophobic whey protein isolate by acylation with fatty acids. European Polymer Journal, 62, 10-18.
ZHONG, Z. & SUN, X. 2001. Thermal and mechanical properties and water absorption of sodium dodecyl sulfate-modified soy protein (115). Journal of applied polymer science, 81, 166-175.

## Patentansprüche

1. Thermoformbarer Mehrschichtverbund, der wenigstens eine thermoplastische Polymerschicht aufweist, auf der eine geschlossene Schicht aus einer proteinhaltigen Formulierung abgeschieden ist,
wobei die Schicht aus der proteinhaltigen Formulierung
- Proteine, die wenigstens teilweise denaturiert sind,
- wenigstens ein denaturierend wirkendes Reagenz und
- einen oder mehrere Weichmacher enthält.

2. Thermoformbarer Mehrschichtverbund nach Anspruch 1, **dadurch gekennzeichnet,**
**dass** die Schicht aus der proteinhaltigen Formulierung zwei unterschiedliche denaturierend wirkende Reagenzien enthält.

3. Thermoformbarer Mehrschichtverbund nach Anspruch 1, **dadurch gekennzeichnet,**
**dass** der Anteil des denaturierend wirkenden Reagenz in der Schicht aus der proteinhaltigen Formulierung zwischen 1% und 40% der Masse an Proteinen in der Schicht beträgt.

4. Thermoformbarer Mehrschichtverbund nach Anspruch 2, **dadurch gekennzeichnet,**
**dass** der Gesamtanteil der beiden denaturierend wirkenden Reagenzien in der Schicht aus der proteinhaltigen Formulierung zwischen 2% und 45% der Masse an Proteinen in der Schicht beträgt.

5. Thermoformbarer Mehrschichtverbund nach einem der Ansprüche 1 bis 4,
**dadurch gekennzeichnet,**
**dass** das denaturierend wirkende Reagenz oder die denaturierend wirkenden Reagenzien in der Lage ist oder sind, nicht-kovalente Bindungen in und zwischen Proteinen aufzubrechen.

6. Thermoformbarer Mehrschichtverbund nach einem der Ansprüche 1 bis 4,
**dadurch gekennzeichnet,**
**dass** das denaturierend wirkende Reagenz oder wenigstens eines der denaturierend wirkenden Reagenzien in der Lage ist, kovalente Bindungen in oder zwischen Proteinen aufzubrechen.

7. Thermoformbarer Mehrschichtverbund nach einem der Ansprüche 1 bis 6,
**dadurch gekennzeichnet,**
**dass** der Anteil an Weichmachern in der Schicht aus der proteinhaltigen Formulierung zwischen 1% und 70% der Masse an Proteinen in der Schicht beträgt.

8. Thermoformbarer Mehrschichtverbund nach einem der Ansprüche 1 bis 7,
**dadurch gekennzeichnet,**
**dass** der Anteil an Proteinen in der Schicht aus der proteinhaltigen Formulierung zwischen 40% und 90% der Gesamtmasse der Schicht beträgt.

9. Thermoformbarer Mehrschichtverbund nach einem der Ansprüche 1 bis 8,
**dadurch gekennzeichnet,**
**dass** die Schicht aus der proteinhaltigen Formulierung einen Anteil an Proteinhydrolysat enthält.

10. Thermoformbarer Mehrschichtverbund nach Anspruch 9, **dadurch gekennzeichnet,**
**dass** der Anteil an Proteinhydrolysat in der Schicht aus der proteinhaltigen Formulierung zwischen 10% und 55% der Masse an Proteinen in der Schicht beträgt.

11. Thermoformbarer Mehrschichtverbund nach einem der Ansprüche 1 bis 10,
**dadurch gekennzeichnet,**
**dass** die Proteine einen Denaturierungsgrad zwischen 10% und 100% aufweisen.

12. Thermoformbarer Mehrschichtverbund nach einem der Ansprüche 1 bis 11,
**dadurch gekennzeichnet,**
**dass** die Schicht aus der proteinhaltigen Formulierung einen Restgehalt an einem Löse- oder Dispersionsmittel enthält, der zwischen 2% und 35% der Masse der Schicht beträgt.

13. Protein enthaltende Formulierung zur Herstellung eines Mehrschichtverbundes gemäß den Ansprüchen 1 bis 12, die eine Zusammensetzung aufweist, die in getrocknetem Zustand der Zusammensetzung der Schicht aus der Protein enthaltenden Formulierung entspricht, wobei die Proteine in der Formulierung auch nicht denaturiert vorliegen können.
